# EUROPEAN PATENT APPLICATION

(11) **EP 1 570 720 A2**
(43) Date of publication of application: **07.09.2005**
(21) Application number: 05251232.4
(22) Date of filing: 01.03.2005
(51) Int. Cl.: A01D 34/82, A01D 34/90, A01D 69/02

(54) **Trimming apparatus**

(30) Priority: 03.03.2004 GB 0404726
(71) Applicant: Grey Technology Limited, Worcester WR5 2RQ (GB)
(72) Inventor: Grey, Nicholas G., Crowle, Worcestershire WR7 4BH (GB)
(74) Representative: Jackson, Derek Charles

(57) **Abstract**

A trimming apparatus (2) comprising a handle means (4) and a cutting head (8). The cutting head (8) is attached directly to the handle means (4) and comprises a motor (28) and a rotatable cutting edge (39). Shielding means (34) adapted to protect a hand of a user is provided on the handle means (4).

## Description

This invention relates to trimming apparatus, for example for use in gardens.

One form of a current garden trimmer is substantially a cutting head on an elongate body which is held by the user by means of a handle provided at the opposite end of the elongate body to the cutting head.

The elongate body of current garden trimmers enables a user to trim surfaces such as lawns and lawn edges whilst standing up. However, there are applications where the use of a trimmer is required whilst the user is closer to the surface to be trimmed, for example whilst crouching in the garden carrying out other garden maintenance activities such as weeding, or where the trimming of a surface requires the user to be relatively close to the surface for accuracy, for example trimming a shrub or hedge.

Garden trimmers are known wherein a cutting head is attached directly to a handle. However, the positioning in use of a user's hand in close proximity to sharp trimmed objects or stinging garden plants could lead to possible injury to the user.

The majority of trimmers are powered by means of mains power supplied via a power lead. Such power leads can often become entangled with themselves and items generally found in gardens, for example ornaments and garden furniture. Accidental damage to a power lead by the cutting head of a trimmer can also occur.

It is therefore an object of the present invention to provide a trimming apparatus which overcomes, or at least ameliorates, the problems of known apparatus.

According to the present invention there is provided a trimming apparatus comprising a handle means and a cutting head, the cutting head being attached directly to the handle means and comprising a motor and a rotatable cutting edge, wherein shielding means adapted to protect a hand of a user is provided on the handle means.

The handle means may contain at least one battery.

The at least one battery may be removable.

The at least one battery may be rechargeable, for example whilst in the trimming apparatus or by recharging means separate to the trimming apparatus.

The rotatable cutting edge may be a blade or a cutting wire, for example selected from plastics and metal material.

The rotatable cutting edge may be removable from the cutting head, for example for sharpening or replacement.

The rotatable cutting edge may be rotatable by the motor to produce a cutting action.

Rotating means may be provided between the handle means and the cutting head.

The rotating means may allow the cutting head to rotate about an axis thereof relative to the handle means such that the orientation of the plane of the rotatable cutting edge relative to the handle can be changed.

The cutting head may be rotatable through an angle of 180 degrees and may be rotatable in either direction about the axis of the rotating means relative to the handle means.

Stop means may be provided to prevent the cutting head being rotated through more than 360 degrees about the axis of the rotating means relative to the handle means.

The shielding means may be arranged to support a wrist of a user of the apparatus and substantially protect a hand of the user from sharp objects. Preferably the shielding means may be arranged to extend from the handle to both sides of the wrist of the user.

The shielding means may be of convex form.

For a better understanding of the present invention and to show more clearly how it may be carried into effect reference will now be made, by way of example, to the accompanying drawings in which:
Figure 1 is a side elevational view of a trimming apparatus according to the present invention in a first configuration;
Figure 2 is a side elevational view of the trimming apparatus of Figure 1 partly in cross-section;
Figure 3 is a perspective view of a battery pack of a trimming apparatus according to the present invention;
Figure 4 is a perspective view of the trimming apparatus of Figure 1;
Figure 5 is a view of the trimming apparatus of Figure 1 from below;
Figure 6 is a perspective view of the trimming apparatus of Figures 1 to 5 in a second configuration; and
Figure 7 is a schematic illustration of a stop mechanism of rotating means of a trimming apparatus according to the present invention.

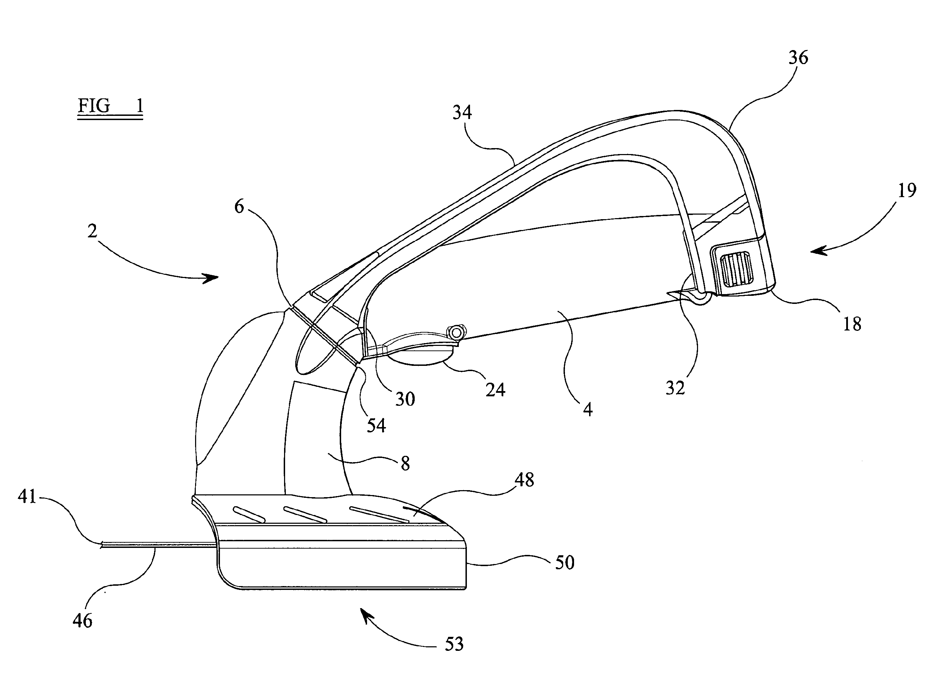

The trimming apparatus 2 shown in Figure 1 comprises a handle 4, suitably moulded of plastics material and of generally circular cross-section. A cutting head 8 is rotatably attached to a first end 6 of the handle 4 furthest from the user in use.

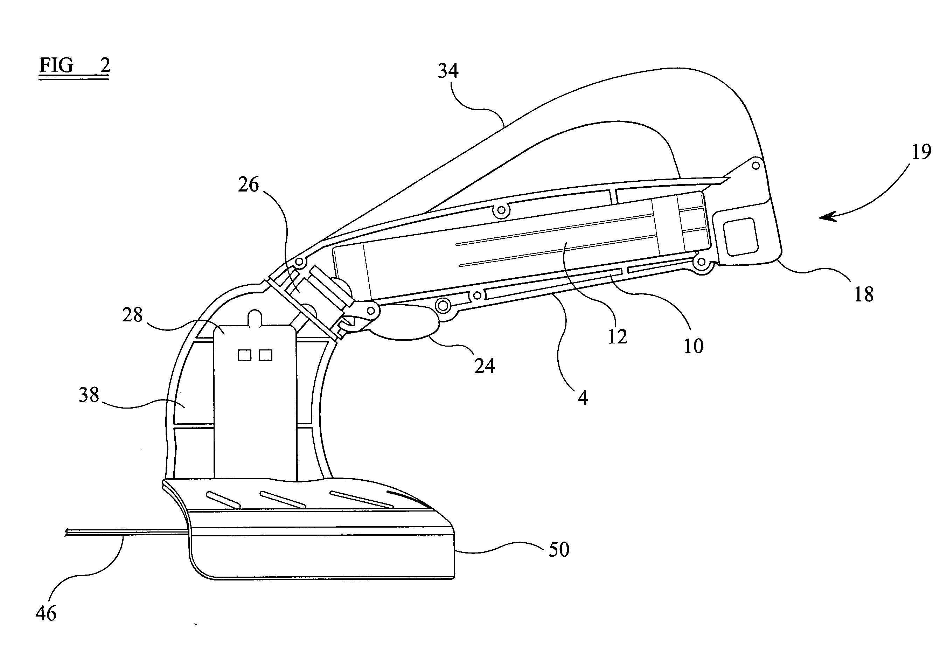

As shown in Figure 2, the handle 4 of the trimming apparatus 2 contains an elongate tubular compartment 10 running substantially the entire length of the handle 4 and in which an elongate battery pack 12 is provided. The battery pack 12 is removable from the handle 4 and is rechargeable by means (not shown) separate to the trimming apparatus 2.

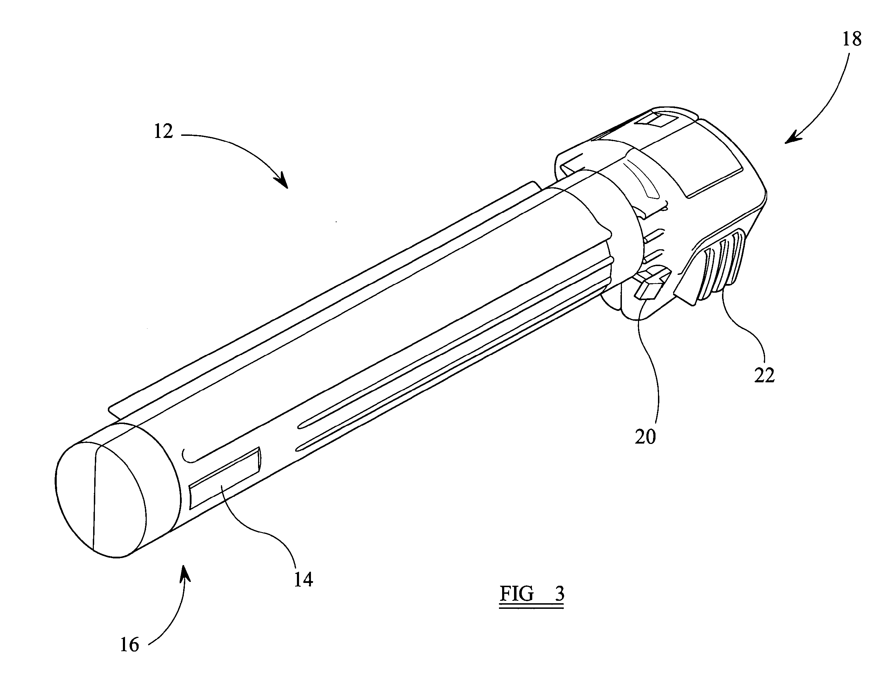

The removable battery pack 12 (as shown in Figure 3) is provided with battery terminals 14 in a region 16 of a first end of the battery pack 12 which are positioned to complement the position of electrical contacts (not shown) provided within the tubular compartment 10 of the handle 4. A second end 18 of the battery pack 12, opposite the first end, is dimensioned to provide a closure for the elongate compartment of the handle 4 and act as the rearward end 19 of the handle 4. The battery pack 12 is held in place within the handle 4 by means of a releaseable catch mechanism 20. Provided on either side of the second end of the battery pack 12 is a release means 22 which releases the catch mechanism 20 to enable the battery pack 12 to be removed.

A button 24 is provided on the handle 4. The button 24 activates a micro switch 26 provided within the handle 4 such that electrical contact can be made between the battery pack and a motor 28, described hereinafter, whereby the motor 28 can be energised. The micro switch 26 ensures that the motor 28 is only energised whilst the button 24 is depressed. For safety purposes, if the button 24 is released the micro switch 26 causes the motor 28 to be de-energised.

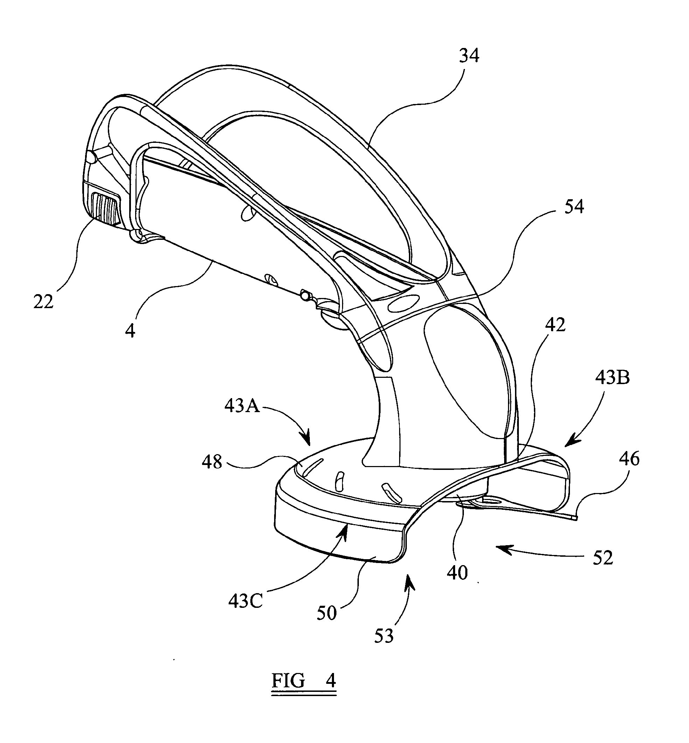

As shown in Figure 1, rigidly attached to a front portion 30 and a rear portion 32 of opposite sides of the handle 4 is a convex shielding member 34. The shielding members are arranged to provide support for a wrist of the user and to protect a hand of the user from sharp objects, such as cut ends of a trimmed item or thistles, and stinging garden plants, for example nettles. The shielding members 34 extend in the longitudinal direction of the handle 4 and are dimensioned such that a portion 36 of each shielding member 34 is spaced further from the handle 4 at a region near to the rear portion 32 of the handle 4 than at a region near to the front portion 30. The shielding members 34, when the trimming apparatus is orientated as shown in Figure 1, extend from the handle 4 in substantially upwardly and outwardly directions relative to the handle 4 such that a cross section of the shielding members 34 and handle 4 shows a "V" shaped section, as shown in Figure 4. The "V" shaped section enables the wrist of the user to be supported on both sides. The "V" shaped section has an included angle in a range substantially from 15 degrees to 150 degrees.

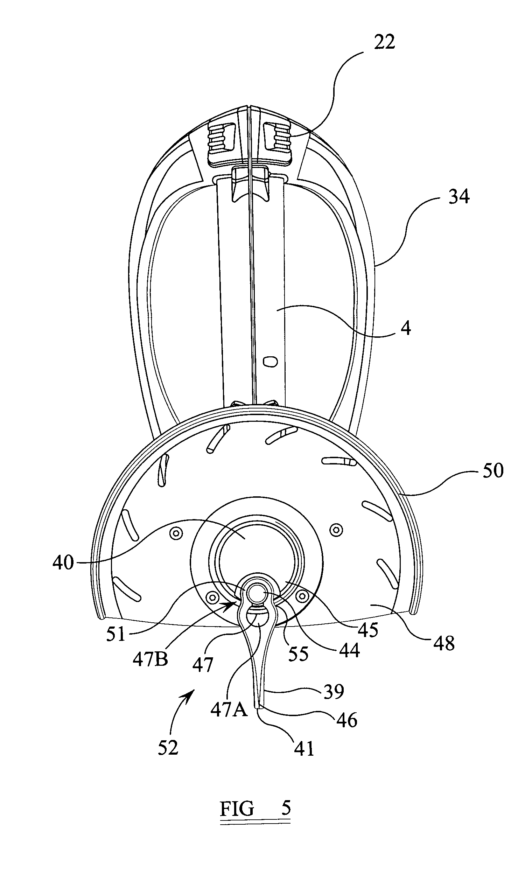

The cutting head 8 is formed with an internal compartment 38 (as shown in Figure 2), in which is provided the motor 28, and an external rotating body 40 (as shown in Figures 4 and 5) connected to the motor and rotatable therewith. The external rotating body 40 is situated in the region of an end 42 of the cutting head 8 furthest from the handle 4.

As shown in Figure 5, a protrusion 44 is provided in an edge region of an end face 45 of the rotating body 40 furthest from the handle 4. The protrusion extends away from the end face 45.

A rotatable blade 46 of plastics material having a cutting edge 39 is removably attached to the protrusion 44 in a recess (not shown) provided in the surface of, and around the circumference of, the protrusion. The blade 46 is provided with an aperture 47 in the shape of a figure "8", that is two co-joined circular aperture portions. A first portion 47A of the aperture, nearest to a tip 41 of the blade, is larger than a second portion 47B of the aperture, the second portion 47B having a diameter substantially complementary to that of the recess in the surface of the protrusion 44.

The first portion 47A is dimensioned to be larger than the diameter of the protrusion 44 in order that the blade 46 can be placed over the protrusion. Moving the tip 41 of the blade 46 perpendicular to the longitudinal axis of the protrusion 44 and away from the protrusion 44 causes the second portion 47B of the aperture 47 to be pulled onto the protrusion 44 and secures the blade in the recess in the surface of the protrusion.

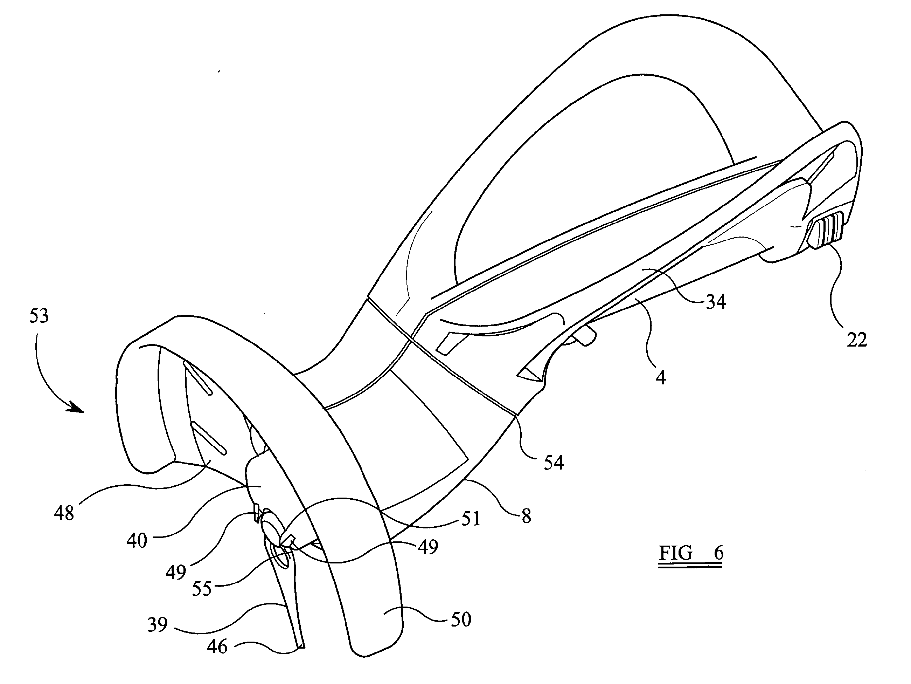

As shown in Figure 6, a pair of retaining members 49 are provided a distance from the protrusion 44 such that a portion 51 of the blade 46 is positioned between the protrusion 44 and the retaining members 49 when attached to the trimming apparatus. The retaining members 49 prevent the blade 46 from rotating relative to the protrusion 44, for example when the blade 46 comes into contact with a surface to be trimmed, as shoulder regions 55 of the blade 46 are substantially prevented from rotating past the retaining members 49 by means of contact between the shoulder portions 55 and the retaining members 49.

As described hereinbefore the motor 28 is powered by the battery pack 12 provided in the handle 4. The motor 28 is rotatably connected to the external rotating body 40 and causes the cutting edge 39 of the blade 46 to rotate in a circular path about an axis substantially perpendicular to the longitudinal axis of the cutting head 8. The positioning of the protrusion 44 at the edge region of the end face 45 of the rotating body 40 ensures that the radius of the circular path followed by the tip 41 of the blade 46 is greater than that of the tip 41 of the blade 46 rotated about the length of the blade.

Provided at the end 42 of the cutting head 8 is a guard means 48 in the form of a partial dish-like structure. The guard means 48 extends laterally outwards from the end 42 of the cutting head 8 in the region 43A of the cutting head nearest to the handle 4 and to the side regions 43B, 43C of the region 43A nearest to the handle (as shown in Figure 4) to form a barrier between a hand of the user holding the handle and the rotating body 40. A partially cylindrical wall portion 50 of the guard means 48 extends away from the handle 4 such that the rotating body 40 is enclosed circumferentially by the guard means 48.

The guard means 48 is of a sufficient diameter that the blade 46 is not obstructed from being rotated. The guard means 48 is not provided in the region 52 of the cutting head 8 to enable the blade 46 attached to the rotating body 40 to extend outwards from the trimming apparatus 2 in order that the blade 46 can be used to trim objects, for example lawn edges or shrubs. The absence of any covering enclosing the region 53 of the guard means 48 furthest from the handle 4 enables the rotating blade 46 to be placed against the surface to be trimmed and to cut over a region greater than only the area in front of the region 52 between the two edges of the peripheral wall portion 50.

As described hereinbefore the cutting head 8 is arranged to be rotatable relative to the handle 4. The cutting head 8 and the handle 4 are connected by rotating means 54.

The rotating means 54 comprises a region of the cutting head and an adjacent region of the handle 4 which are inclined relative to the longitudinal axis of the handle 4. The relative movement of adjacent faces of the inclined regions enables the cutting head 8 to move relative to the handle 4.

Figure 6 shows a configuration of the trimming apparatus 2 with the cutting head 8 rotated through 180 degrees relative to the configuration shown in Figure 1. In the configuration shown in Figure 6 the guard means is still between the blade 46 and the user but the cutting edge 39 of the blade 46 is arranged to cut in a plane substantially perpendicular to the longitudinal axis of the handle rather than in a plane substantially parallel to the longitudinal axis of the handle as shown in Figure 1.

The rotating means 54 is arranged to allow the cutting head 8 to be rotated around the axis of the rotating means 54 by nominally 180 degrees in either direction relative to the handle 4 from the configuration shown in Figure 1. That is, the largest angle through which the cutting head can be rotated relative to the handle is 360 degrees as would occur by rotation of the cutting head in either direction from the configuration in Figure 6, through the configuration shown in Figure 1 to form the configuration in Figure 6 again.

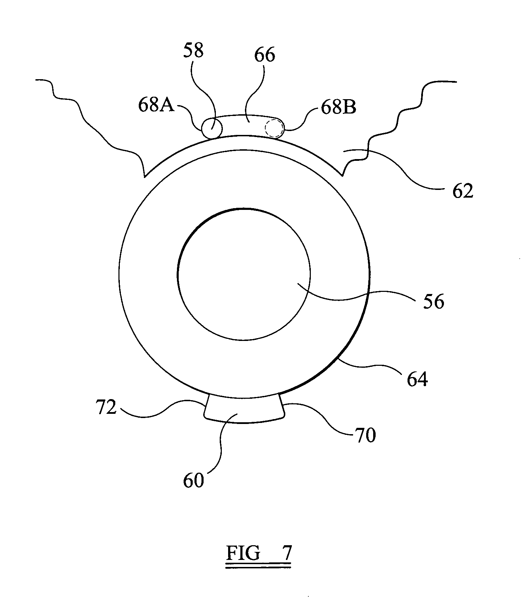

The rotating means 54 prevents rotation of the cutting head 8 in excess of 180 degrees from the configuration shown in Figure 1 by means of an arrangement of a movable pin 58 and a stop 60, as shown in Figure 7.

When the trimming apparatus 2 is arranged in the configuration shown in Figure 1 (blade 46 arranged to cut in a plane substantially parallel to the handle 4) the movable pin 58 provided on one component 62 of the rotating means 54 and the stop 60 provided on another component 64 of the rotating means 54 are positioned opposite one another within the rotating means 54.

Detents (not shown) hold the cutting head 8 in place relative to the handle 4 such that the stop 60 and the movable pin 58 are positioned opposite to one another in the configuration shown in Figure 1. The detents are in the form of a first hemispherical protrusion and a second hemispherical protrusion on a face of one component of the rotating means and a first complementary shaped recess and a second complementary shaped recess on an adjacent face of another component of the rotating means.

In the configuration shown in Figure 1, the first hemispherical protrusion is positioned in the first complementary shaped recess, and the second hemispherical protrusion is positioned in the second complementary shaped recess. The first hemispherical protrusion and the first complementary shaped recess are positioned diametrically opposite the second hemispherical protrusion and the second complementary shaped recess about the axis of rotation of the rotating means. The detents are positioned equidistant from the axis of rotation of the rotating means.

The movement of the pin 58 is limited to be within an arcuate region 66 within the portion 62 of the rotating means 54. The pin 58 is retained within the arcuate region 62 by means of arcuate retaining members in the region of opposite end portions of the pin 58. However, the retaining members permit the pin to freely move from one side of the region 66 to the other. The stop 60 is provided on the complementary portion 64 of the rotating means 54. The stop 60 is arranged such that rotation of the cutting head 8 relative to the handle 4 by 180 degrees anticlockwise as shown in Figure 7 brings the pin 58 and a first side 70 of the stop 60 into contact. The stop 60 is dimensioned such that it can pass between the opposing retaining members of the pin. Further rotation of the cutting head is prevented by the retaining members around the pin 58 when the pin 58 is in position 68A.

Rotation of the stop 60 through the 180 degrees transforms the trimming apparatus 2 into the configuration shown in Figure 6 (blade 46 arranged to cut in a plane substantially perpendicular to the handle 4).

The cutting head and the handle are held in the configuration shown in Figure 6 by means of the aforementioned detents. In the configuration shown in Figure 6 the first hemispherical protrusion is positioned in the second complementary shaped recess, and the second hemispherical protrusion is positioned in the first complementary shaped recess.

As the stop 60 has a finite width, the use of a pin fixed in position would mean that rotation of the first side 70 of the stop 60 relative to a fixed pin would allow rotation in one direction of 180 degrees, but rotation in a clockwise direction as shown in Figure 7 would be less than 180 degrees due to a second side 72 of the stop 60 opposite the first side 70 coming into contact with the pin 58.

However, as the pin 58 is freely movable within the arcuate region 66 the stop 60 can be rotated through the extra degrees relating to the rotation of the width of the stop 60. The pin 58 will be moved a corresponding distance within the arcuate region 66 by contact between the second side 72 of the stop and the pin 58 until it is prevented by further movement by the retaining members associated with the pin 58 resulting in the pin 58 being in position 68B. As will be appreciated, the amount of movement of the pin 58 permitted by the retaining members is arranged to correspond to the movement required to compensate for the width of the stop 60, that is the distance between the first side 70 and the second side 72 of the stop.

As shown in Figure 7, a channel 56 is provided in the rotating means through which electrical connections (not shown) pass between the battery pack 12 and the motor 28.

By preventing the cutting head 8 from being rotated more than 180 degrees in either direction from the configuration shown in Figure 1 the electrical connections between the battery pack 12 and the motor 28 passing through the channel 56 in the rotating means 54 cannot become excessively twisted and thus damage to the connections is avoided. The cutting head must always be rotated back the way it has previously been rotated when changing the cutting plane of the blade relative to the handle.

In use of the trimming apparatus 2 according to the present invention, the apparatus is placed close to a surface to be trimmed, such as an edge of a lawn or a shrub, and the button 24 is pressed, activating the micro switch 26, to energise the motor 28. Consequently, the rotating body 40 is rotated causing the blade 46 to be rotated and thus producing a circular cutting action in the region of the surface being trimmed.

Depending on whether the surface to be trimmed is positioned parallel, or perpendicular, to the handle of the trimming apparatus 2 the cutting head 8 can be rotated relative to the handle 4 such that the plane of rotation of the blade 46 can be arranged to be substantially parallel with the surface to be trimmed.

Any material extending from the surface, for example weeds, grass or shoots, is cut by the blade 46 and separated from the surface.

If at any time the button 24 is released the motor 28 is deactivated and the rotation of the rotating body 40 and attached blade 46 is stopped relatively quickly for safety reasons by means known to a person skilled in the art.

The shielding members 34 support both sides of the wrist of the user to prevent excessive wrist flexing and reduce possible straining of the user's wrist as movement of the trimming apparatus 2 relative to a surface can involve the flexing of a user's wrist to alter the direction of movement of the trimming apparatus. The positioning of the shielding members 34 both sides of the wrist of the user prevents the hand of the user coming into contact with sharp objects and stinging garden plants.

A trimming apparatus has been described hereinbefore in which the battery pack 12 is removable for recharging. It should be appreciated that the battery pack 12 could be recharged whilst in the handle 4. It should also be appreciated that replaceable, non-rechargeable, batteries could be used to power the motor 28.

Although the trimming apparatus has been described as having a single blade, it should be appreciated that a plurality of blades, for example two opposing blades may be provided on a trimming apparatus in accordance with the present invention.

Although a blade of plastics material has been described hereinabove, it should be appreciated that other cutting means, for example metal blades or cutting wire, known to a person skilled in the art, could be used.

## Claims

1. A trimming apparatus comprising a handle means (4) and a cutting head (8), the cutting head (8) being attached directly to the handle means (4) and comprising a motor (28) and a rotatable cutting edge (39), **characterised in that** shielding means (34) adapted to protect a hand of a user is provided on the handle means (4) .

2. A trimming apparatus as claimed in claim 1, **characterised in that** the handle means (4) contains at least one battery (12), for example a removable battery.

3. A trimming apparatus as claimed in claim 2, **characterised in that** the at least one battery (12) is rechargeable, for example rechargeable whilst in the trimming apparatus or rechargeable by separate recharging means.

4. A trimming apparatus as claimed in any preceding claim, **characterised in that** the rotatable cutting edge (39) is a blade, for example selected from plastics and metal material.

5. A trimming apparatus as claimed in any one of claims 1 to 3, **characterised in that** the rotatable cutting edge (39) is a cutting wire, for example selected from plastics and metal material.

6. A trimming apparatus as claimed in any preceding claim, **characterised in that** the rotatable cutting edge (39) is removable from the cutting head (8).

7. A trimming apparatus as claimed in any preceding claim, **characterised in that** the rotatable cutting edge (39) is rotatable by the motor (28) to produce a cutting action.

8. A trimming apparatus as claimed in any preceding claim, **characterised in that** rotating means (54) is provided between the handle means (4) and the cutting head (8), for example the rotating means (54) allows the cutting head (8) to rotate, preferably through an angle of 180 degrees, about an axis thereof relative to the handle means (4) such that the orientation of the plane of the rotatable cutting edge (39) relative to the handle can be changed.

9. A trimming apparatus as claimed in claim 8, **characterised in that** the cutting head (8) is rotatable in either direction about the axis of the rotating means (54) relative to the handle means (4).

10. A trimming apparatus as claimed in claim 8 or 9, **characterised in that** stop means (58, 60) are provided to prevent the cutting head (8) being rotated through more than 360 degrees about the axis of the rotating means (54) relative to the handle means (4).

11. A trimming apparatus as claimed in any preceding claim, **characterised in that** the shielding means (34) are arranged to support a wrist of a user of the apparatus and are arranged to substantially protect a hand of the user from sharp objects.

12. A trimming apparatus as claimed in any preceding claim, **characterised in that** the shielding means (34), preferably of convex form, are arranged to extend from the handle to both sides of the wrist of the user.
